# EUROPÄISCHE PATENTSCHRIFT

(11) **EP 0 887 805 B1**
(45) Veröffentlichungstag und Bekanntmachung des Hinweises auf die Patenterteilung: **08.05.2002**
(21) Anmeldenummer: 98110934.1
(22) Anmeldetag: 15.06.1998
(51) Int. Cl.: G21C 17/017

(54) **Gerät zum Bestimmen eines Profils entlang der Innenoberfläche eines Rohres**
Implement for determining the inner wall profile of a tube
Instrument d'exploration du profil de la paroi intérieure d'un tube

(30) Priorität: 27.06.1997 DE 19727475
(43) Veröffentlichungstag der Anmeldung: 30.12.1998
(73) Patentinhaber: Framatome ANP GmbH, 91050 Erlangen (DE)
(72) Erfinder: Lelickens, Hartmut, Dipl.Ing., 91369 Wiesenthau (DE); Meier-Hynek, Konrad, 91074 Herzogenaurach (DE)
(74) Vertreter: Mörtel & Höfner

(56) Entgegenhaltungen:
- EP-A- 0 158 544
- AU-A- 4 138 193
- DE-A- 3 706 660
- DE-B- 2 801 000
- DE-C- 3 400 834
- FR-A- 2 420 739
- US-A- 3 348 314
- PATENT ABSTRACTS OF JAPAN vol. 012, no. 368 (P-766), 4. Oktober 1988 & JP 63 120211 A (OYO CHISHITSU KK), 24. Mai 1988

## Beschreibung

Gerät zum Bestimmen eines Profils entlang der Innenoberfläche eines Rohres

Die Erfindung betrifft ein Gerät zum Bestimmen des Profils entlang der Innenoberfläche eines Rohres, insbesondere eines Gehäuserohres für ein Meßgerät in einem Kernreaktor.

Ein solches Gehäuserohr befindet sich in einem Reaktordruckbehälter und enthält beispielsweise Meßgeräte zum Bestimmen des Neutronenflusses. Es wird daher mit Kernflußmeßgehäuserohr bezeichnet. Es besteht in der Regel aus einem oberen und einem unteren Rohrteil, die getrennt von oben und unten in den Reaktordruckbehälter eingeführt werden und mit einer Steckverbindung aneinandergefügt werden. Die Steckverbindung kann einen Schiebesitz beinhalten.

Nach dem Aneinanderfügen der beiden Rohrteile können diese einen kleinen Winkel miteinander bilden oder können geringfügig seitlich gegeneinander versetzt sein. Außerdem können durch Verschleißerscheinungen Ausnehmungen in der Innenoberfläche des Rohres entstehen.

In DE-B-2 056 480 ist eine Vorrichtung zum Ausmessen von Bohrungen beschrieben, bei der zwischen zwei axial beabstandeten, der Fixierung der Vorrichtung im Rohr dienenden Zentriervorrichtungen eine Tastvorrichtung angeordnet ist, die mit Hilfe von Messtastern die Innenoberfläche eines Rohres abtastet. Diese Vorrichtung eignet sich aber nicht dazu, z.B. einen axialen Versatz zwischen zwei ineinander gesteckten Rohrteilen exakt festzustellen. Um den kritischen Bereich der Trennfuge der Rohrteile abzutasten muss nämlich eine Zentriervorrichtung in dem einen Rohrteil und die andere zentriervorrichtung in dem anderen Rohrteil verspannt werden. Dabei kommt es schon allein deshalb zu Messungenauigkeiten, weil die Mittellängsachse zwischen den beiden Zentriervorrichtungen nicht mehr exakt coaxial zur Mittellängsachse des Rohres verläuft. Ausserdem kann der axiale Verstaz durch die Radiale Krafteinwirkung der beiden Zentriervorrichtungen zumindest zum Teil wieder ausgeglichen werden. Bisher konnten kleine Unregelmäßigkeiten der genannten Art an der Innenoberfläche des Rohres nicht erkannt werden.

Der Erfindung liegt die Aufgabe zugrunde, ein Gerät zum Bestimmen des Profils entlang der Innenoberfläche eines Rohres anzugeben, mit dem einfach und zuverlässig Unregelmäßigkeiten der Innenoberfläche des Rohres und insbesondere Unregelmäßigkeiten an der Verbindungsstelle zweier Rohrteile erkannt werden.

Die Aufgabe wird gemäß der Erfindung dadurch gelöst, dass die Tastvorrichtung an dem in das Rohr einführbaren Ende bzw. der Spitze des Gerätes und die Zentriervorrichtung dahinter angeordnet ist.

Falls in der Innenoberfläche des Rohres eine Ausnehmung vorhanden ist, wird die Tastvorrichtung ausgelenkt, und der Weg der Tastvorrichtung wird mit dem Wegaufnehmer gemessen. Entsprechende Messungen können an verschiedenen Positionen im Rohr durchgeführt werden, so daß sich durch die Abfolge der Meßwerte ein Profil der Innenoberfläche ergibt.

Beispielsweise weist das Gerät zwei Tastvorrichtungen auf, die mit der Innenoberfläche des Rohres an einander gegenüberliegenden Positionen in Kontakt gebracht werden können. Jeder dieser Tastvorrichtungen sind dann jeweils Wegaufnehmer zugeordnet. Die Tastvorrichtungen sind über Federn kraftschlüssig mit einem Joch verbunden, das mit einem Antrieb in Verbindung steht. Es können auch mehr als zwei Tastvorrichtungen vorhanden sein.

Durch die Federn werden unterschiedliche Bewegungen der Tastvorrichtungen gegenüber dem Joch und damit gegenüber dem Antrieb ausgeglichen. Auf die Wegaufnehmer werden die Wege der Tastvorrichtungen direkt übertragen.

Der Antrieb kann einen ersten pneumatischen Zylinder umfassen, der durch eine Stange mit dem Joch verbunden ist. Er kann auch direkt mit einer Tastvorrichtung verbunden sein.

Schon mit zwei Tastvorrichtungen ist es möglich, die Innenoberfläche des Rohres an einander gegenüberliegenden Stellen zu vergleichen. Durch einen solchen Vergleich können selbst sehr kleine Unebenheiten erkannt werden.

Beispielsweise weist das Gerät eine Zentriervorrichtung zum Zentrieren an der Innenoberfläche des Rohres auf. Damit kann sichergestellt werden, daß das Gerät während einer Messung, insbesondere dann, wenn an gegenüberliegenden Stellen gemessen wird, seine Position in der Mitte des Rohres nicht verändert. Man erzielt dadurch ein besonders zuverlässiges Meßergebnis an gegenüberliegenden Positionen.

Die Zentriervorrichtung weist beispielsweise einen zweiten pneumatischen Zylinder auf, mit dem an die Innenwand des Rohres anpreßbare Verspannungsmittel verbunden sind. Diese Verspannungsmittel können insbesondere Kugeln sein, die über den Umfang des Gerätes verteilt an die Innenwand des Rohres angepreßt werden. Eine solche Zentriervorrichtung wirkt besonders zuverlässig.

Die Tastvorrichtung ist beispielsweise ein von dem Wegaufnehmer aus in Richtung zur Innenoberfläche des Rohres gebogener Bowdenzug. Eine solche Tastvorrichtung berührt stets die Innenwand des Rohres und läßt so Unebenheiten der Innenwand erkennen. Falls zwei derartige Tastvorrichtungen vorhanden sind, die die Innenwand des Rohres an einander gegenüberliegenden Stellen berühren, kann die Beschaffenheit der Innenoberfläche an gegenüberliegenden Seiten des Rohres miteinander verglichen werden.

Zum Bestimmen von Unterschieden zwischen den Ergebnissen von zwei oder mehreren Tastvorrichtungen kann eine Auswerteeinheit vorhanden sein, die mit den Wegaufnehmern, die den Tastvorrichtungen zugeordnet sind, elektrisch verbunden ist.

Mit dem Gerät nach der Erfindung wird insbesondere der Vorteil erzielt, daß in einem engen Rohr eine Unebenheit der Oberfläche zuverlässig erkannt und ihre Tiefe gegenüber der glatten Innenoberfläche des Rohres bestimmt werden kann.

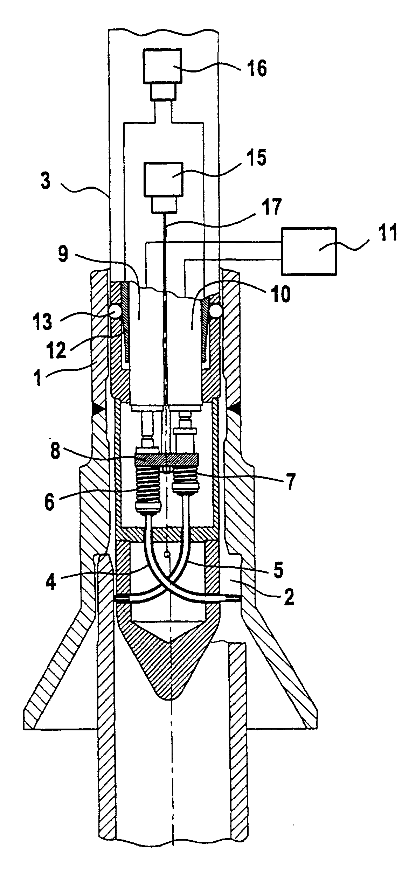

Ein Ausführungsbeispiel für ein Gerät nach der Erfindung zum Bestimmen eines Profils entlang der Innenoberfläche eines Rohres wird anhand der Zeichnung näher erläutert:

Die Zeichnung zeigt die Spitze eines solchen Gerätes in einem Rohr.

In einem Rohr 1, das innen an einer Seite eine Unregelmäßigkeit 2 aufweist, ist ein Gerät 3 zum Bestimmen eines Profils entlang der Innenoberfläche des Rohres 1 eingeführt. Von dem Gerät 3, das sich genauso wie das Rohr 1 über mehrere Meter bis zum oberen Ende des Rohres 1 erstreckt, ist nur die Spitze dargestellt. Das Gerät 3 weist zwei gebogene Bowdenzüge 4 und 5, die als Tastvorrichtungen dienen, auf. Die Spitzen dieser Bowdenzüge 4, 5 berühren stets die Innenoberfläche des Rohres 1, im vorliegenden Fall an zwei weitgehend horizontal gegenüberliegenden Positicnen. An der Stelle, an der sich die Unregelmäßigkeit 2 befindet, berührt der erste Bowdenzug 4 die Innenoberfläche des Rohres 1 in dieser Unregelmaßigkeit 2. Der zweite Bowdenzug 5 berührt die Innenoberfläche des Rohres 1 an der gegenüberliegenden glatten Stelle. Jeder der Bowdenzüge 4, 5 ist mit einem Wegaufnehmer 9, 10 verbunden, der ein Teil des Gerätes 3 ist. Außerdem ist jeder Bcwdenzug 4, 5 über eine Feder 6, 7 kraftschlüssig mit einem Joch 8 verbunden, das mit einem Antrieb für einen Vorschub, beispielsweise mit einem ersten pneumatischen Zylinder 15 durch eine Stange 17 verbunden ist. Die Feder 6 ist dann, wenn die dazugehörige Tastvorrichtung in eine Unregelmäßigkeit 2 eingreift, mehr ausgelenkt als die Feder 7, deren zugehörige Tastvorrichtung 5 an einer ebenen Stelle des Rohres 1 anliegt.

Zum Messen des jeweiligen Weges der Bowdenzüge 4, 5 ist jeweils ein Wegaufnehmer 9, 10 zwischen dem der Feder 6, 7 zugewandten Ende des Bowdenzuges 4, 5 und dem festen Körper des Gerätes 3 angeordnet.

Mit bereits einem Wegaufnehmer 9 oder 10 kann bedingt durch eine Veränderung des Weges der Bowdenzüge 4, 5 eine Unregelmäßigkeit 2 im Rohr 1 erkannt werden. Mit zwei Wegaufnehmern 9, 10 sowie zwei Federn 6, 7 und zwei Bowdenzügen 4, 5 kann durch Vergleich der Rohrinnenoberfläche an zwei, z.B. gegenüberliegenden Stellen, eine Unebenheit besonders leicht erkannt werden. Insbesondere dazu sind die Wegaufnehmer 9, 10 mit einer Auswerteeinheit 11 elektrisch verbunden.

Zum Befestigen des Gerätes 3 im Rohr 1 kann eine Zentriervorrichtung vorhanden sein, die einen zweiten schematisch dargestellten pneumatischen Zylinder 16 umfaßt, der über eine konische Hülse 12 auf über den Außenumfang des Gerätes 3 verteilte Kugeln 13 wirkt und diese an die Rohrinnenoberflache anpreßt. Dadurch wird eine zentrierte Position des Gerätes 3 im Rohr 1 während des Meßvorganges stabilisiert. Um eine Messung an einer anderen Stelle im Rchr 1 vorzunehmen, wird die Zentriervorrichtung gelöst, das Gerät 3 verschoben und dann wieder zentriert.

Zum Nachführen der mit den Bowdenzügen 4, 5 verbundenen Tastspitzen ist ein erster pneumatischer Zylinder 15 vorhanden, der auf das Joch 8 wirkt, das kraftschlüssig über die Federn 6, 7 die Bowdenzüge 4, 5 bewegt.

Ein Verfahren zum Bestimmen eines Profils entlang der Innenoberfläche des Rohres 1 sieht vor, daß das Gerät 3 an bestimmten Positionen nacheinander zentriert wird, und daß an jeder so ausgewählten Stelle mittels einem oder zwei Bowdenzügen 4, 5 die Innenoberfläche des Rohres 1 untersucht wird. Dabei wird der Verschiebeweg der Tastspitzen aufweisenden Bowdenzüge 4, 5, die mit den Wegaufnehmern 9, 10 verbunden sind, bestimmt. Der Verschiebeweg ist ein Maß für die Tiefe einer Unregelmäßigkeit 2 in der Wand 1. Mit mindestens zwei Bowdenzügen 2, 4 kann die relative Tiefe der Unregelmäßigkeit 2 im Vergleich zu einer anderen, in der Regel glatten Innenoberfläche des Rohres 1 angezeigt werden.

Mit dem Gerät 3 können Unebenheiten im Inneren eines sehr langen Kernflußmeßgehäuserohres an einer beliebigen Stelle zuverlässig erkannt werden.

## Patentansprüche

1. Gerät (3) zum Bestimmen des Profils entlang der Innenoberfläche eines Rohres (1), insbesondere eines Gehäuserohres für ein Meßgerät in einem Kernreaktor, mit mindestens einer mit der Innenoberfläche des Rohres (1) in Kontakt bringbaren Tastvorrichtung, die eine Tastspitze aufweist und die mit einem Wegaufnehmer (9, 10) verbunden ist zum Messen des Weges der Tastspitze, und mit einer Zentriervorrichtung zum Zentrieren des Gerätes (3) im Rohr (1),
**dadurch gekennzeichnet, dass** die Zentriervorrichtung zum Befestigen des Gerätes (3) im Rohr (1) ausgebildet ist und dadurch, dass die Tastvorrichtung an dem in das Rohr (1) einführbaren Ende bzw. der Spitze des Gerätes (3) und die Zentriervorrichtung dahinter angeordnet ist.

2. Gerät (3) nach Anspruch 1,
**gekennzeichnet durch** mit der Innenoberfläche des Rohres (1) an einander gegenüberliegenden Positionen in Kontakt bringbare Tastvorrichtungen, denen jeweils ein Wegaufnehmer (9, 10) zugeordnet ist, wobei die Tastvorrichtungen über Federn (6, 7) kraftschlüssig mit einem Joch (8) verbunden sind, das mit einem Antrieb (15) in Verbindung steht.

3. Gerät (3) nach Anspruch 2,
**dadurch gekennzeichnet, dass** der Antrieb (15) einen ersten pneumatischen Zylinder (15) umfaßt, der über eine Stange (17) mit dem Joch (8) verbunden ist.

4. Gerät (3) nach einem der Ansprüche 1 bis 3,
**dadurch gekennzeichnet, dass** die Zentriervorrichtung einen zweiten pneumatischen Zylinder (16) aufweist, mit dem an die Innenwand des Rohres (1) anpreßbare Verspannungsmittel verbunden sind.

5. Gerät (3) nach einem der Ansprüche 1 bis 4,
**dadurch gekennzeichnet, dass** die Tastvorrichtung ein in Richtung zur Innenoberfläche des Rohres (1) gebogener Bowdenzug (4, 5) ist.

6. Gerät (3) nach einem der Ansprüche 2 bis 5,
**dadurch gekennzeichnet, dass** die den beiden Tastvorrichtungen zugeordneten Wegaufnehmer (9, 10) mit einer Auswerteeinheit (11) zum Bestimmen von Meßwertdifferenzen verbunden sind.

## Claims

1. Implement (3) for determining the profile along the inner surface of a tube (1), in particular of a housing tube for a measuring instrument in a nuclear reactor, with at least one sensing device which can be brought into contact with the inner surface of the tube (1), has a sensing tip and is connected to a displacement transducer (9, 10), for measuring the displacement of the sensing tip, and with a centring device for centring the implement (3) in the tube (1), **characterized in that** the centring device is designed for fastening the implement (3) in the tube (1) and **in that** the sensing device is arranged on the end or tip of the implement (3) which can be inserted into the tube (1) and the centring device is arranged behind the said sensing device.

2. Implement (3) according to Claim 1, **characterized by** sensing devices which can be brought into contact with the inner surface of the tube (1) at positions lying opposite one another, assigned to which sensing devices there is in each case a displacement transducer (9, 10), the sensing devices being positively connected via springs (6, 7) to a yoke (8), which is in connection with a drive (15).

3. Implement (3) according to Claim 2, **characterized in that** the drive (15) comprises a first pneumatic cylinder (15), which is connected via a rod (17) to the yoke (8).

4. Implement (3) according to one of Claims 1 to 3, **characterized in that** the centring device has a second pneumatic cylinder (16), to which bracing means which can be pressed against the inner wall of the tube (1) are connected.

5. Implement (3) according to one of Claims 1 to 4, **characterized in that** the sensing device is a Bowden cable (4, 5) bent in the direction of the inner surface of the tube (1).

6. Implement (3) according to one of Claims 2 to 5, **characterized in that** the displacement transducers (9, 10) assigned to the two sensing devices are connected to an evaluation unit (11) for determining differences in measured values.

## Revendications

1. Instrument (3) de détermination du profil le long de la face intérieure d'un tube (1), notamment d'un tube enveloppe pour un appareil de mesure dans un réacteur nucléaire, comprenant au moins un dispositif palpeur pouvant être mis en contact avec la face intérieure du tube (1), comportant une pointe de palpage et relié à un capteur (9, 10) de trajet destiné à mesurer le trajet de la pointe de palpage, et un dispositif de centrage destiné à centrer l'instrument (3) dans le tube (1)
**caractérisé en ce que** le dispositif de centrage est constitué de manière à fixer l'instrument (3) dans le tube (1) et par le fait que le dispositif de palpage est disposé à l'extrémité pouvant être introduite dans le tube (1) ou à la pointe de l'instrument (3) et le dispositif de centrage est disposé derrière.

2. Instrument (3) suivant la revendication 1,
**caractérisé par** des dispositifs de palpage qui peuvent être mis en contact en des positions mutuellement opposées avec la face intérieure du tube (1) et auxquels sont associées respectivement un capteur (9, 10) de trajet, les dispositifs de palpage étant reliés par des ressorts (6, 7) à coopération de force avec une culasse (8) qui est reliée à un dispositif (15) d'entraînement.

3. Instrument (3) suivant la revendication 2,
**caractérisé en ce que** le dispositif (15) d'entraînement comprend un premier vérin (15) pneumatique qui est relié à la culasse (8) par une tringle (17).

4. Instrument (3) suivant l'une des revendications 1 à 2,
**caractérisé en ce que** le dispositif de centrage comporte un deuxième vérin (16) pneumatique auquel sont reliés des moyens de blocage pouvant être repoussés sur la paroi intérieure du tube (1).

5. Instrument (3) suivant l'une des revendications 1 à 4,
**caractérisé en ce que** le dispositif de palpage est un câble (4, 5) Bowden courbé en direction de la face intérieure du tube (1).

6. Instrument suivant l'une des revendications 2 à 5,
**caractérisé en ce que** les capteurs (9, 10) de trajet associés aux deux dispositifs de palpage sont reliés à une unité (11) d'analyse destinée à déterminer des différences de valeur.
